# EUROPEAN PATENT SPECIFICATION

(11) **EP 2 875 931 B1**
(45) Date of publication and mention of the grant of the patent: **30.11.2016**
(21) Application number: 14189211.7
(22) Date of filing: 16.10.2014
(51) Int. Cl.: B29C 51/26, B29C 51/46

(54) **Method for forming a sheet of reinforced thermoplastic material**
Verfahren zur Herstellung einer Folie aus verstärktem thermoplastischem Material
Procédé de formation d'une feuille de matériau thermoplastique renforcé

(30) Priority: 16.10.2013 IT MO20130292
(43) Date of publication of application: 27.05.2015
(73) Proprietor: C.M.S. S.p.A., 24019 Zogno (BG) (IT)
(72) Inventor: Villa, Giuseppe, 21100 Varese (IT)
(74) Representative: Pandolfi, Paolo

(56) References cited:
- EP-A1- 1 382 431
- EP-A2- 2 647 488
- DE-A1-102005 003 212
- FR-A1- 2 669 572
- US-A- 4 239 472
- US-A- 5 843 492
- US-A- 5 895 624
- US-A1- 2003 146 543
- US-A1- 2009 104 300
- US-B1- 6 517 649
- DATABASE WPI Week 199922 Thomson Scientific, London, GB; AN 1999-259497 XP002738125, -& JP H11 77816 A (DAIHATSU MOTOR CO LTD) 23 March 1999 (1999-03-23)

## Description

### Background of the invention

The invention relates to a method for forming a sheet of reinforced thermoplastic material for making finished products such as shells of suitcases, sports equipment, vehicle parts and the like.

Reinforced thermoplastic materials, which are generally supplied in sheets, comprise a matrix in thermoplastic material reinforced by a reinforcing material or filler that is added in the form of long or short fibres or particles. The fibres can be arranged in the matrix according to a same orientation, for example parallel to one another, or according to different orientations, for example to form a grid. Such materials have high mechanical characteristics, are light and easy to recycle and for this reason they are widely used in many technical fields where such characteristics are required. Nevertheless, owing to the high mechanical properties, in particular to the high tensile strength and to the change of shape, forming reinforced thermoplastic materials is particularly complex.

A method is known for forming a sheet of reinforced thermoplastic material making a finished product comprising a sheet-loading step in which the sheet is fixed to a frame. In particular, the sheet is fixed to the frame in such a manner that to each of the four corner zones of the sheet an end of a spring is connected, the other end of the spring being fixed to a corner of the frame. The springs can have different coefficients of elasticity. Subsequently, there is provided a step of heating the sheet up to a softening temperature of the reinforced thermoplastic material. Still subsequently, whilst the sheet is maintained tensioned by the springs, the known method comprises a step of forming the sheet between a first half mould and a second half mould, suitably moulded so as to shape the sheet in the desired shape of the finished product.

A drawback of the method disclosed above consists of the fact that it is not able to form substantially smooth surfaces, i.e. surfaces that are free of blemishes such as wrinkles or creases, in particular at zones of the finished product in which there are surfaces connected by small radii of curvature. In fact, the elastic force exerted by the springs on the corner zones of the sheet is not able to accompany the material properly during deformation between the half moulds. In other words, during the deformation step, the elastic force exerted by the springs on the corner zones of the sheet is not able to control effectively a tension inside the material that is such as to avoid the formation of imperfections at small radii of curvature of the finished product.

US2003/146543A1 discloses a method and apparatus for supporting and tensioning athermoformable material sheet and for handling this sheet during various phases of amolding process, EP1382431A1 describes a method for forming a shaped product from aplastic sheet. US4239472A discloses an apparatus for use in the vacuum-forming of sheet material in a mould. US5895624A describes methods and apparatus for forming of thick wall plastic sheets laminated with formable decorative film layers. US2009/104300A1 discloses a material-clamping unit and a method for clamping material to be used for a forming machine that forms thermoplastic sheet material.

### Summary of the invention

An object of the invention is to improve the methods for forming a sheet of reinforced thermoplastic material.

A further object is to provide a method for forming a sheet of reinforced thermoplastic material that enables a finished product to be obtained that is substantially free of blemishes, in particular at zones of the finished product in which there are surfaces connected by small radii of curvature.

Such objects and still others are achieved by a method for forming a sheet of reinforced thermoplastic material according to one or more of the claims set out below.

### Brief description of the drawings

The invention can be better understood and implemented with reference to the attached drawings, which illustrate an embodiment thereof by way of non-limiting example, in which:
Figure 1 is a perspective view of a forming machine that is usable for applying the method for forming a sheet of reinforced thermoplastic material according to the invention;
Figure 2 is a view like that in Figure 1 of the forming machine devoid of certain details to highlight others better;
Figure 3 is a perspective view of a device, included in the machine in Figure 1, to move and retain a sheet of reinforced thermoplastic material;
Figure 4 is a frontal view of a grasping element included in the device in Figure 3 in a first operating configuration;
Figure 5 is a perspective view of the grasping element in Figure 4 in the first operating configuration;
Figure 6 is a frontal view of a grasping element included in the device in Figure 3 in a second operating configuration;
Figure 7 is a perspective view of the grasping element in Figure 6 in the second operating configuration;
Figures 8, 9, 10 and 12 are frontal views of a forming station included in the machine in Figure 1 showing some operating steps of the method according to the invention;
Figure 11 is a side view of a grasping element included in the device in Figure 3 in an operating step of the method according to the invention.

### Detailed description

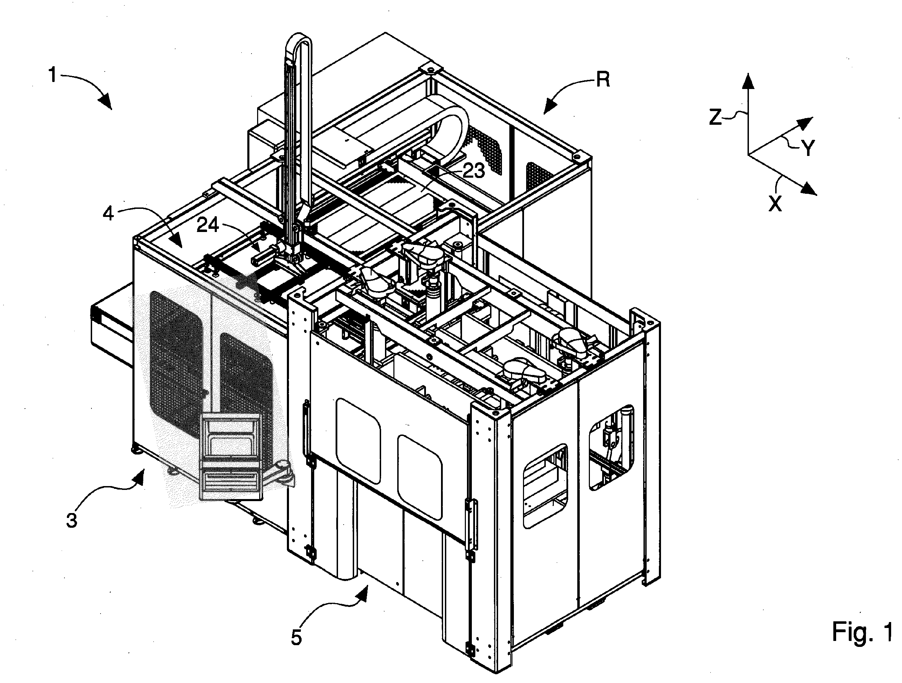

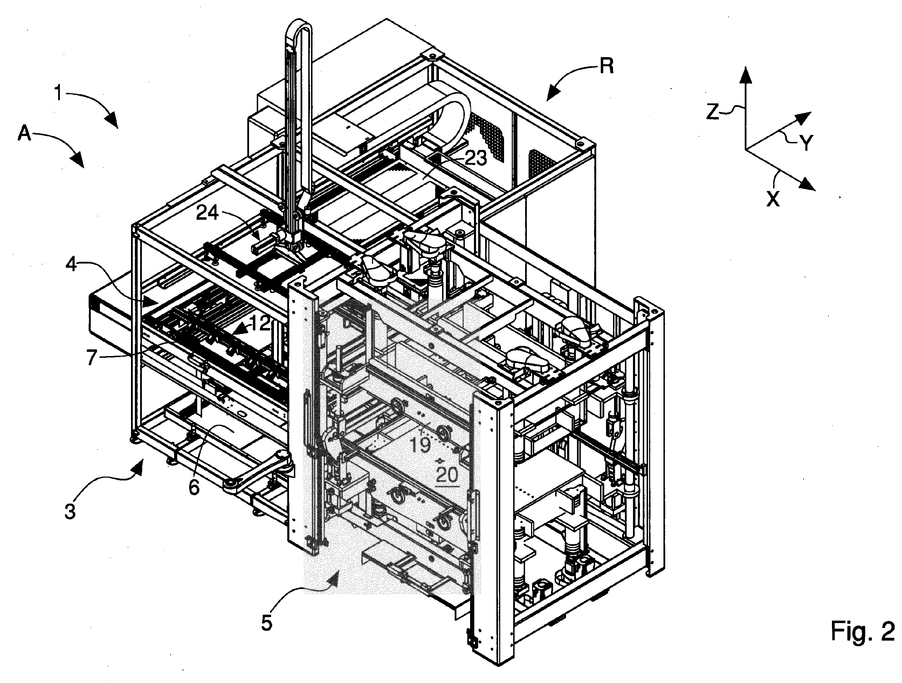

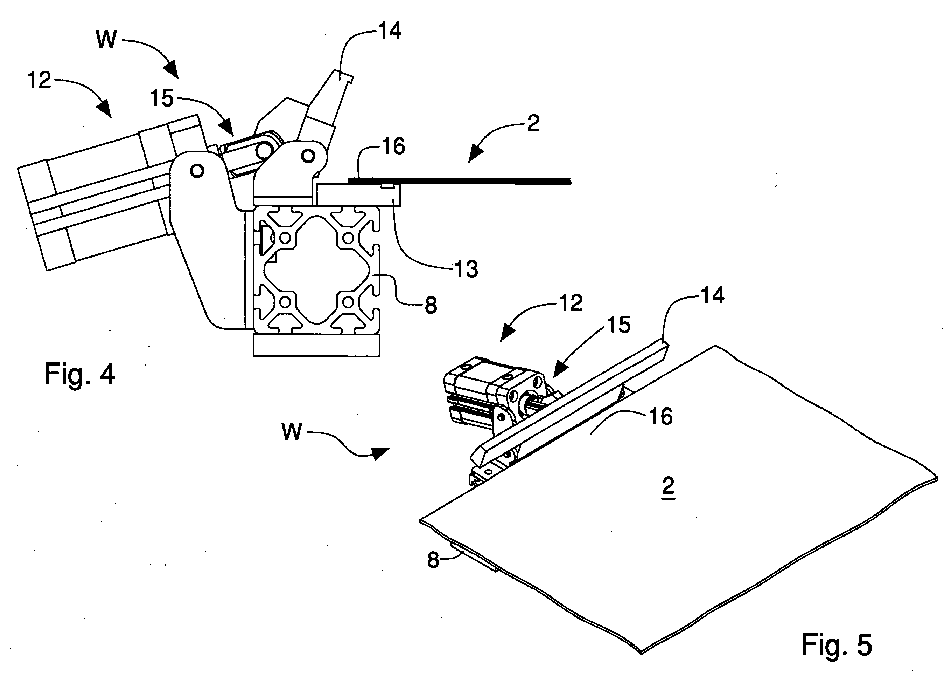

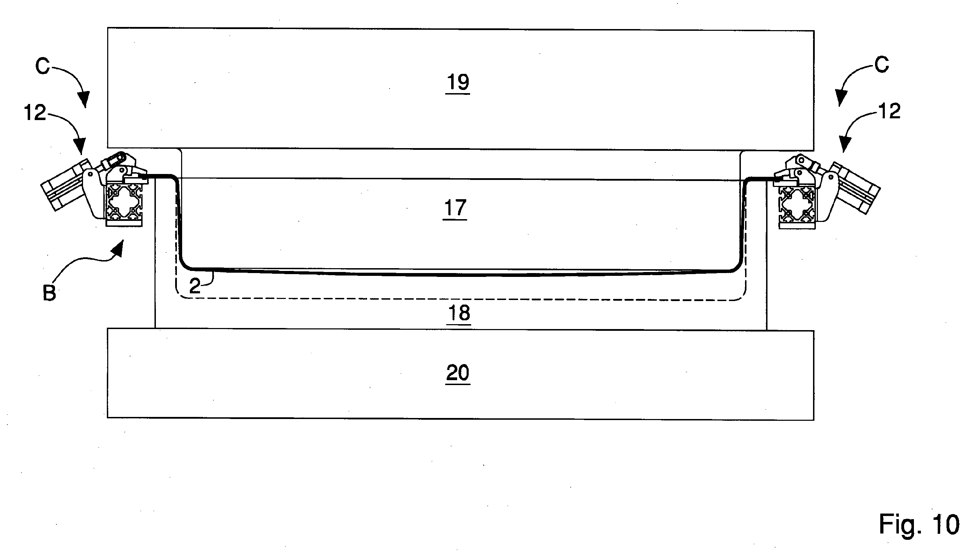

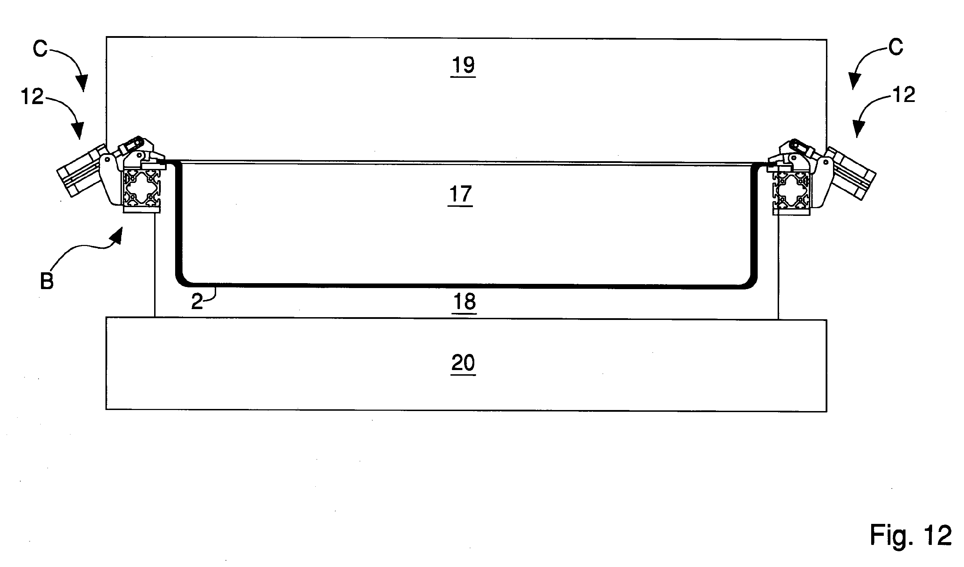

With reference to Figures 1 and 2, there is shown a forming machine 1 for forming, in accordance with the method according to the invention, a sheet 2 (Figures 5, 7-12) made of a reinforced thermoplastic material. As disclosed previously, reinforced thermoplastic materials consist of a matrix made of thermoplastics material reinforced by a reinforcing material, or filler, which is added in the form of long or short fibres or of particles. The fibres can be arranged in the matrix according to a same orientation, for example parallel to one another, or according to different orientations, for example forming a grid. Such materials have high mechanical characteristics, are light and easy to recycle and for this reason are widely used in many technical fields where such characteristics are required.

The forming machine 1 comprises a loading station 3, a heating station 4 and a forming station 5.

The loading station 3 is loaded, for example by means of a forklift truck, with an orderly pile of sheet 2, which is not shown. The sheets 2, having, for example, a rectangular shape and a thickness up to about 10mm, are rested by the forklift truck on a supporting plane 6 included in the loading station 3.

Above the loading station 3 the heating station 4 is positioned in which a sheet 2 is heated until the reinforced thermoplastic material is induced to soften, in particular the thermoplastic matrix of the material is induced to soften.

In particular, the heating station 4 comprises a first heating element 23 and a second heating element, which is not shown, which is movable horizontally between an advanced position in which they heat the sheet 2, and a retracted position R, in which they do not heat the sheet 2. More precisely, the first heating element 23 and the second heating element are configured for heating, in the advanced position, the upper and lower surfaces of greatest dimension of the sheet 2 via infrared radiation. The heating station 4 further comprises suitable sensors for controlling the temperature and heating power, the latter being a function of the type of reinforced thermoplastic material to be heated.

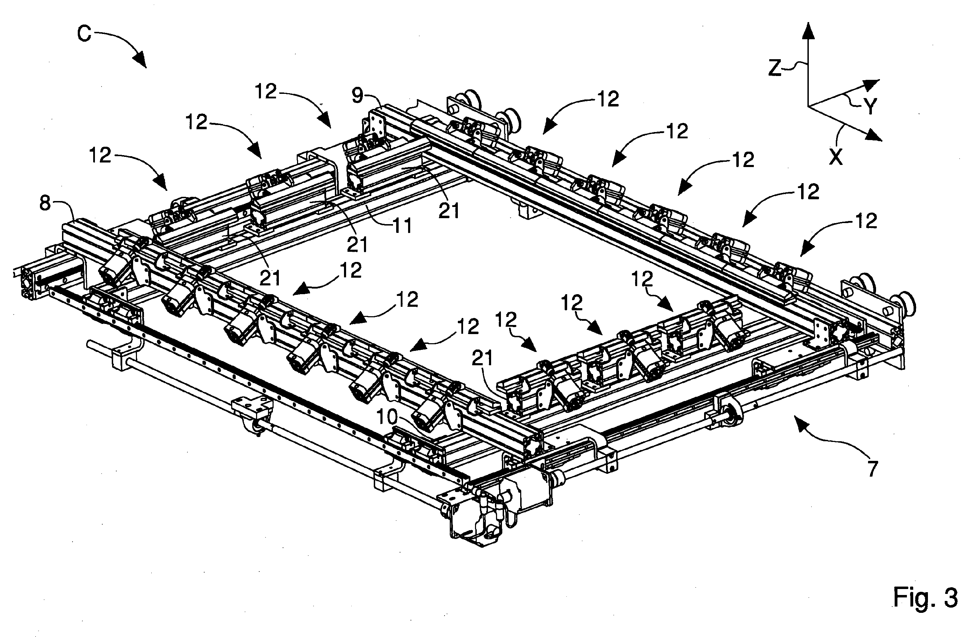

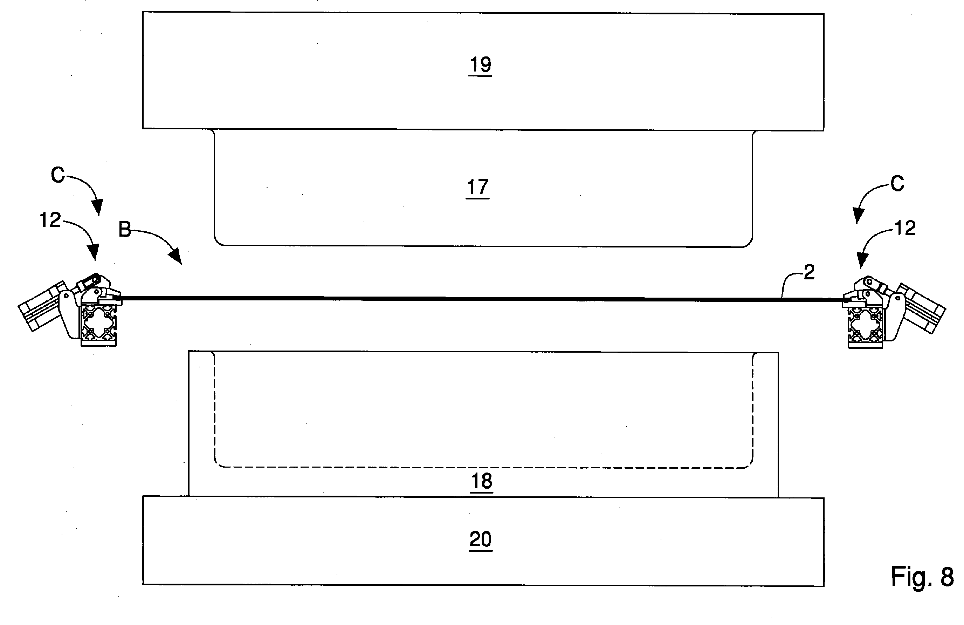

The forming machine 1 further comprises a frame 7, which is movable horizontally for moving the sheet 2 between the heating station 4 and the forming station 5. More precisely, the frame 7, having a substantially rectangular shape, is movable between a first position A (Figure 2), in which it is located, and positions the sheet 2 in the heating station 4, and a second position B (Figures 8-10, 12), in which it is located, and positions the sheet 2, in the forming station 5. Also, the frame 7 slidably supports a first support 8, a second support 9, a third support 10 and a fourth support 11 (Figure 3).

The first support 8, the second support 9, the third support 10 and the fourth support 11 are made, for example, of aluminium profiled sections, and have an elongated shape.

Also, the first support 8 and the second support 9 have substantially the same length, face one another and extend parallel to a first, substantially horizontal, direction X. In particular, the first support 8 and the second support 9 are positioned at longer sides of the frame 7. Also, the first support 8 and the second support 9 are movable towards/away from one another along a second direction Y, which is substantially horizontal and perpendicular to the first direction X.

On the other hand, the third support 10 and the fourth support 11 have substantially the same length, less than the length of the first support 8 and of the second support 9, face one another and extend parallel to the second direction Y. The third support 10 and the fourth support 11 are operationally positioned below the first support 8 and the second support 9. In particular, the third support 10 and the fourth support 11 are positioned at the sides of lesser length of the frame 7. Also, the third support 10 and the fourth support 11 are movable towards/away from one another along the first direction X.

The first support 8, the second support 9, the third support 10 and the fourth support 11 each support a plurality of grasping elements 12. More precisely, the first support 8 and the second support 9 each support six grasping elements 12 arranged alongside one another, whereas the third support 10 and the fourth support 11 each support three grasping elements 12 arranged alongside one another; between the third support 10 and the respective grasping elements 12 and between the fourth support 11 and the respective grasping elements 12, there being interposed respective supports 21 arranged for positioning the grasping elements 12 supported by the supports 10-11 at the same height as the grasping elements 12 supported by the support 8-9.

The grasping elements 12 (Figures 4-7, 11) are each arranged for grasping, in particular pressing, a respective peripheral zone 16 (Figures 5, 7, 11) of the sheet 2.

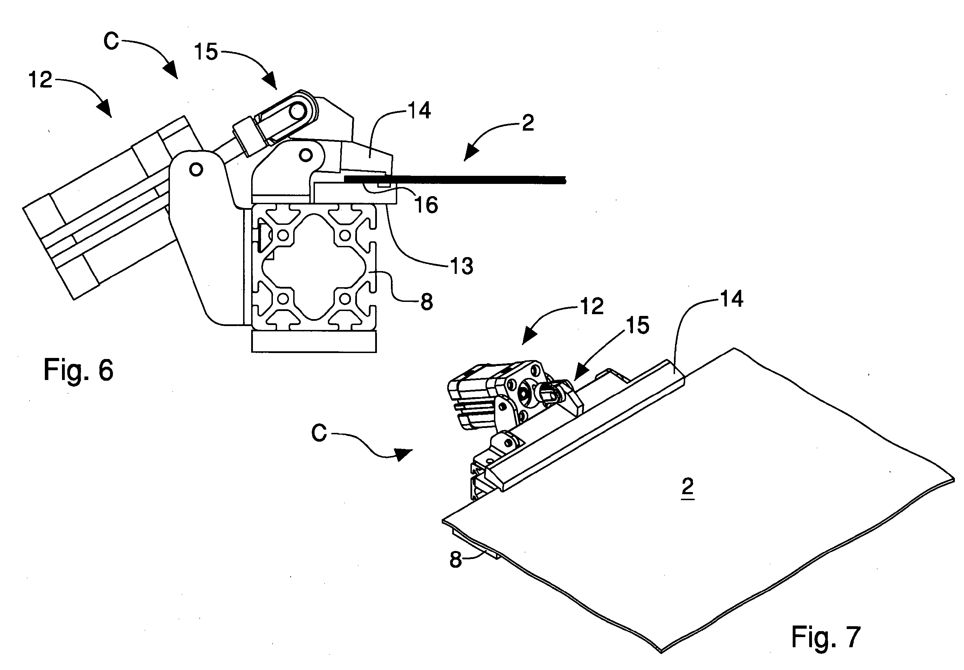

Each grasping element 12 comprises a lower jaw 13 and an upper jaw 14 of elongated shape, the lower jaw 13 having substantially the same length as the upper jaw 14. The lower jaw 13 is fixed, whereas the upper jaw 14 is movable towards and away from the lower jaw 13. Also, each grasping element 12 comprises an actuator 15, for example a hydraulically or pneumatically or electrically driven actuator connected to the upper jaw 14 to move the latter towards and away from the lower jaw 13. In this manner, the actuator 15 drives the grasping element 12 between an open position W, shown in Figures 4 and 5, in which the upper jaw 14 is raised with respect to the lower jaw 13, this enabling the sheet 2 to be rested on or raised from the lower jaw 13, and a closed position C, shown in Figures 6-12, in which the upper jaw 14 cooperates with the lower jaw 13 to grasp a peripheral zone 16 of the sheet 2. In particular, as will be disclosed better below, in the closed position C, the actuator 15 can drive the upper jaw 14 in such a manner that the grasping element 12 exerts, on the peripheral zone 16 of the sheet 2 retained by the grasping element 12, an adjustable grasping force.

The forming machine 1 further includes a lifting device 24, for lifting, for example by means of a plurality of suction cups, a sheet 2 positioned in the loading station 3 and resting the sheet 2 on the lower jaws 13 of the grasping elements 12 when the frame 7 is in the first position A.

The aforesaid forming station 5 comprises a first half mould 17, for example a male mould, and a second half mould 18, for example a female mould, positioned below with respect to the first half mould 17.

The first half mould 17 and the second half mould 18 are fixed, respectively, to a first table 19 and to a second table 20, that are movable vertically towards/away from one another in a programmed manner, along a third direction Z, substantially vertical and perpendicular to the first direction X and to the second direction Y.

In use, initially, a sheet-loading step 2 is provided, in which the lifting device 24 removes from the loading station 3 the sheet 2 positioned at the top of the pile of sheets 2, and positions this sheet 2 on the lower jaws 13 of the grasping elements 12, the grasping elements 12 being in the open position W, the frame 7 being in the first position A, the first heating element 23 and the second heating element being in the retracted position R.

Subsequently, a sheet-heating step is provided in which the grasping elements 12 are driven in the closed position C so as to grasp substantially an entire perimeter of the sheet 2 and in which the first heating element 23 and the second heating element are positioned in the advanced position so as to each face a respective surface of greater extent of the sheet 2 to heat the latter up to a softening temperature of the reinforced thermoplastic material.

Subsequently, a sheet 2 tensioning step is provided, in which the first and the second heating element are moved away from the sheet 2, and the first support 8 and the second support 9 are moved away from one another along the second direction Y and the third support 10 and the fourth support 11 are moved away from one another along the first direction X. In this manner, in the tensioning step, the grasping elements 12, in the closed position C and supported by the first support 8, by the second support 9, by the third support 10 and by the fourth support 11, tension the sheet 2 along the first direction X and along the second direction Y so as to give to the heated sheet 2 a substantially flat shape so as to facilitate the moving thereof in the forming station 5 by positioning the frame 7 in the second position B. In other words, in the tensioning step, the grasping elements 12 suitably moved along the first direction X and the second direction Y by the respective supports 8-11, subject the sheet 2 to a first preset tension so as to contrast the tendency of the sheet 2 to "belly" following heating.

Still subsequently, with reference to Figures 8-12, a step of forming the sheet 2 is shown.

Before starting forming, i.e. before the first half mould 17 and the second half mould 18 are brought towards one another in a programmed manner by respectively the first table 19 and the second table 20, the sheet 2 is moved from the frame 7 to the forming station 5, in the second position B, the grasping elements 12 are in the closed position C and the first half mould 17 and the second half mould 18 are spaced apart from one another (Figure 8).

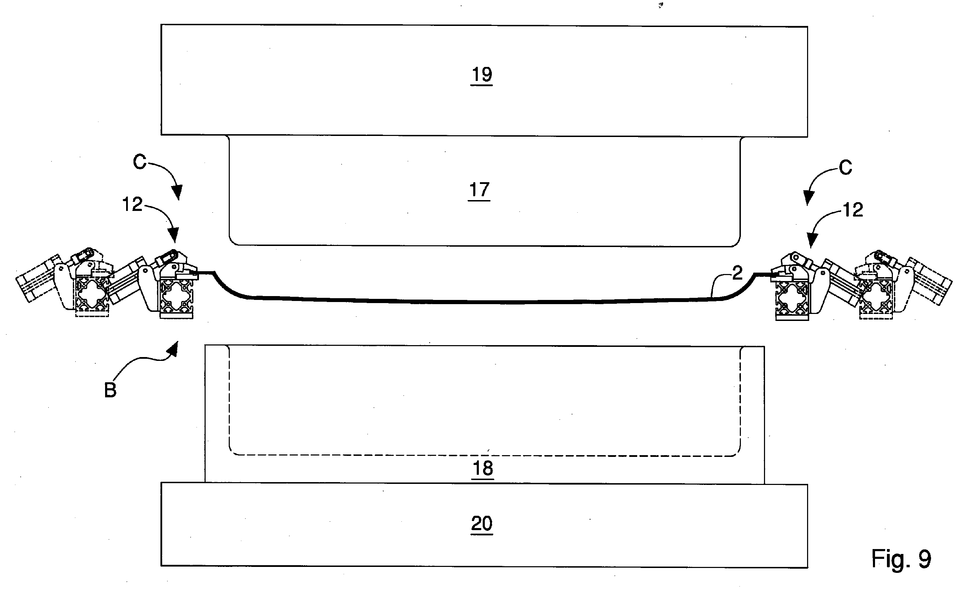

Subsequently, also before starting forming, the first support 8 and the second support 9 are moved towards one another along the second direction Y and the third support 10 and the fourth support 11 are moved towards one another along the first direction X so as to give to the sheet 2 a shape similar to that had after the heating step and before the tensioning step (Figure 9). In other words, in this step, the grasping elements 12, suitably moved along the first direction X and second direction Y by the respective supports 8-11, subject the sheet 2 to a second preset tension, less than the aforesaid first tension, so as to give to the sheet 2 a non-planar conformation.

Also subsequently, the first half mould 17 and the second half mould 18 are brought towards one another, in a programmed manner, in order to deform (press) mechanically the sheet 2 so as to give to the latter a desired shape.

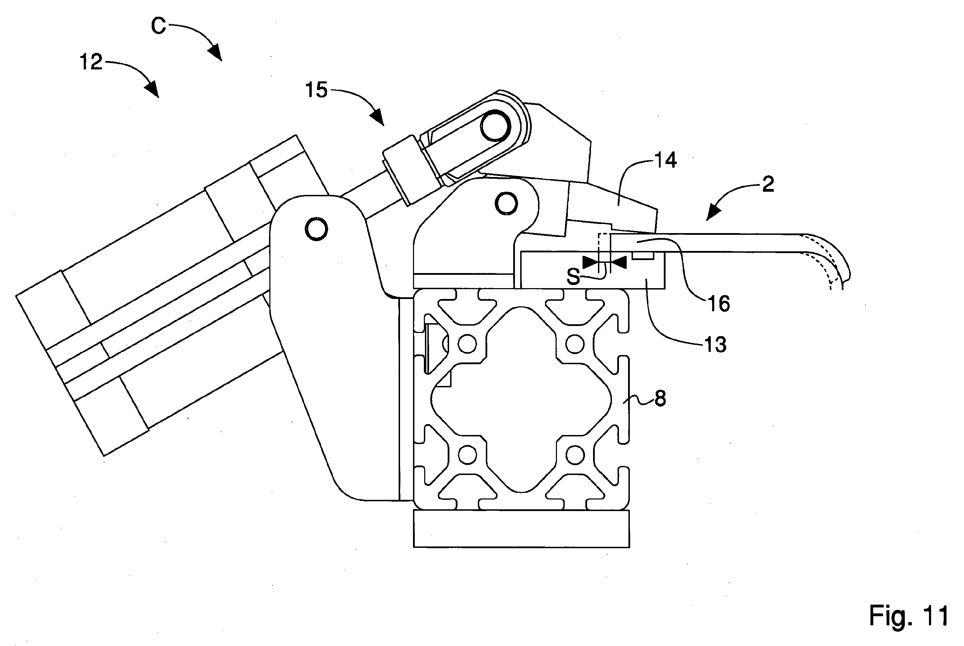

The method according to the invention provides that, during the forming step, i.e. during the step of moving the first half mould 17 to the second half mould 18 with consequent deformation of the sheet 2 between the first half mould 17 and the second half mould 18, each grasping force exerted by a respective grasping element 12 on a respective peripheral zone 16 of the perimeter of the sheet 2, is adjustable, independently of one another, in function of at least one process parameter, so as to control a sliding S (Figure 11) of each of the peripheral zones 16 relatively to (a contact surface of) a respective grasping element 12 in function of a shape of the first half mould 17 and of the second half mould 18.

More precisely, the method according to the invention enables, by adjusting the grasping force exerted by the grasping elements 12, the peripheral zones 16 of the sheet 2 to be moved towards one another in a controlled and independent manner so as to follow the material during forming. Also, more precisely, the method according to the invention enables the peripheral zones 16 to be released in a controlled manner from the respective grasping elements 12, by adjusting the grasping force exerted by each grasping element 12 on the respective peripheral zone 16 of the perimeter of the sheet 2, in function of at least one process parameter.

In other words, the method according to the invention relates together, instant by instant, the grasping force exerted by each grasping element 12 on the respective peripheral zone 16, with a process parameter.

Preferably, this process parameter is a relative speed of the first half mould 17 with respect to the second half mould 18.

Alternatively, this process parameter is a relative speed of the first half mould 17 with respect to the second half mould 18 and/or a relative position of the first half mould 17 with respect to the second half mould 18.

In this manner, in use, it is possible to control instant by instant during forming, by the numeric control that commands and manages the forming machine 1, the tension in the reinforced thermoplastic material, this minimising the risk of formation of blemishes such as wrinkles or creases at zones of the finished product in which surfaces connected by small radii of curvature are present.

In fact, owing to the independent adjustment of the grasping forces, it is possible to accompany in a controlled manner the material during deformation between the half moulds 17, 18.

After the forming step, a step, which is not shown, of unloading the formed sheet 2 is provided. The step of unloading comprises moving the half moulds 17, 18 away from one another and removing the shaped sheet 2.

In one embodiment of the invention that is not shown, so-called pressure forming is provided. In this embodiment, the first half mould 17 and the second half mould 18 are shaped in such a manner that, once coupled, they define between one another a moulding chamber into which a pressurised fluid is introduced to make the material constituting the sheet 2 adhere to the first half mould 17 or to the second half mould 18.

In another embodiment of the invention that is not shown, the sheet 2 can be of any shape, for example square.

Other variants on and addictions to what has been disclosed above or to what has been illustrated in the attached Figures falling within the scope of the attached claims are further possible.

## Claims

1. Method for forming a sheet (2) of reinforced thermoplastic material, comprising the steps of:
- heating said sheet (2) to a softening temperature of said material;
- grasping at least a first peripheral zone and a second peripheral zone of said sheet (2) by respectively a first grasping element and a second grasping element; and
- forming said sheet (2) between a first half mould (17) and a second half mould (18);
**characterised in that**
during said forming there is provided adjusting in function of at least one process parameter, independently of one another, a first grasping force exerted by said first grasping element on said first peripheral zone, and a second grasping force exerted by said second grasping element on said second peripheral zone to enable said peripheral zones to be released in a controlled manner from the respective grasping element.

2. Method according claim 1, wherein said grasping comprises grasping said sheet (2) substantially along an entire perimeter thereof by means of a plurality of grasping elements (12), during said forming there being provided adjusting in function of said at least one process parameter, independently of one another, respective grasping forces exerted by said grasping elements (12) on respective peripheral zones (16) of said perimeter, so as to control a sliding (S) of each of said peripheral zones (16) of said sheet (2) relatively to a respective grasping element (12) in function of a shape of said first half mould (17) and of said second half mould (18).

3. Method according claim 1, or 2, wherein said adjusting comprises releasing in a controlled manner said peripheral zones (16) from said grasping elements (12).

4. Method according to any preceding claim, wherein said adjusting comprises bringing opposite peripheral zones (16) of said sheet (2) near one another in a controlled manner.

5. Method according to any preceding claim, wherein said grasping comprises compressing peripheral zones (16) of said sheet (2).

6. Method according to any preceding claim, wherein said process parameter is a relative speed of said first half mould (17) with respect to said second half mould (18).

7. Method according to any preceding claim, wherein said process parameter is a relative position of said first half mould (17) with respect to said second half mould (18).

8. Method according to any preceding claim, wherein said forming comprises moving said first half mould (17) and said second half mould (18) towards one another in a programmed manner.

9. Method according to any preceding claim, and comprising, after said heating, moving away, by means of said first grasping element and said second grasping element, at least said first peripheral zone from said second peripheral zone, said first peripheral zone and said second peripheral zone, during said moving away, being substantially fixed relatively to said first grasping element and to said second grasping element, respectively.

10. Method according claim 9, wherein said moving away comprises subjecting said sheet (2) to a first preset tension.

11. Method according claim 9, or 10, wherein said first peripheral zone is opposite said second peripheral zone, said method comprising, before said forming and after said moving away, moving, by means of said first grasping element and said second grasping element, at least said first peripheral zone near said second peripheral zone, said first peripheral zone and said second peripheral zone, during said moving near, being substantially fixed relatively to said first grasping element and to said second grasping element, respectively.

12. Method according claim 11, as claim 11 is appended to claim 10, wherein said moving near comprises subjecting said sheet (2) to a second preset tension that is less than said first tension.

13. Method according to any preceding claim, wherein said first half mould (17) is a male mould and said second half mould (18) is a female mould, wherein said forming comprises forming said sheet (2) by mechanical compression of said material between said male mould and said female mould.

14. Method according to any one of claims 1 to 12, wherein said first half mould (17) is a male mould and said second half mould (18) is a female mould, said male mould and said female mould being shaped in such a manner that, once coupled, they define between one another a moulding chamber into which a pressurised fluid is introduced to make said material adhere to said male mould or to said female mould.

15. Method according to any preceding claim, wherein said adjusting enables a sliding (S) to be controlled of said first peripheral zone of said sheet (2) with respect to said first grasping element and of said second peripheral zone of said sheet (2) with respect to said second grasping element in function of a shape of said first half mould (17) and of said second half mould (18).

## Patentansprüche

1. Verfahren zum Formen einer dünnen Platte (2) aus verstärktem thermoplastischem Material mit den folgenden Schritten:
- Erhitzen der Platte (2) auf eine Erweichungstemperatur des Materials;
- Ergreifen wenigstens einer ersten Umfangszone und einer zweiten Umfangszone der Platte (2) durch jeweils ein erstes Greifelement und ein zweites Greifelement und
- Formen der Platte (2) zwischen einer ersten Halbform (17) und einer zweiten Halbform (18);
**dadurch gekennzeichnet, dass**
während des Formens ein Einstellen als Funktion von wenigstens einem Prozessparameter erfolgt, wobei unabhängig voneinander eine erste Greifkraft, die von dem ersten Greifelement auf die erste Umfangszone ausgeübt wird, und eine zweite Greifkraft, die von dem zweiten Greifelement auf die zweite Umfangszone ausgeübt wird, um es zu erlauben, dass die Umfangszonen auf eine kontrollierte Weise von dem betreffenden Greifelement freigegeben werden.

2. Verfahren nach Anspruch 1, bei dem das Ergreifen der Platte (2) im Wesentlichen entlang des gesamten Umfangs derselben mithilfe einer Mehrzahl von Greifelementen (12) umfasst, wobei während des Formens ein Einstellen als Funktion von wenigstens einem Prozessparameter erfolgt, mit jeweils voneinander unabhängigen Greifkräften, die von den Greifelementen (12) auf die betreffenden Umfangszonen (16) des Umfangs ausgeübt werden, um so ein Gleiten (S) von jeder der Umfangszonen (16) der Platte (2) in Bezug auf ein betreffendes Greifelement (12) als Funktion einer Form der ersten Halbform (17) und der zweiten Halbform (18) zu kontrollieren.

3. Verfahren nach Anspruch 1 oder 2, bei dem das Einstellen das Freigeben der Umfangszonen (16) von den Greifelementen (12) auf eine kontrollierte Weise umfasst.

4. Verfahren nach irgendeinem vorhergehenden Anspruch, bei dem das Einstellen das Aneinanderbringen von gegenüberliegenden Umfangszonen (16) der Platte (2) nahe zueinander auf eine kontrollierte Weise umfasst.

5. Verfahren nach irgendeinem vorhergehenden Anspruch, bei dem das Ergreifen ein Komprimieren von Umfangszonen (16) der Platte (2) umfasst.

6. Verfahren nach irgendeinem vorhergehenden Anspruch, bei dem der Prozessparameter die relative Geschwindigkeit der ersten Halbform (17) in Bezug auf die zweite Halbform (18) ist.

7. Verfahren nach irgendeinem vorhergehenden Anspruch, bei dem der Prozessparameter eine relative Position der ersten Halbform in Bezug auf die zweite Halbform (18) ist.

8. Verfahren nach irgendeinem vorhergehenden Anspruch, bei dem das Formen das Bewegen der ersten Halbform (17) und der zweiten Halbform (18) aufeinander zu in einer programmgesteuerten Weise umfasst.

9. Verfahren nach irgendeinem vorhergehenden Anspruch, das ferner nach dem Aufheizen das Wegbewegen wenigstens der ersten Umfangszone von der zweiten Umfangszone mithilfe des ersten Greifelements und des zweiten Greifelements umfasst, wobei die erste Umfangszone und die zweite Umfangszone während des Wegbewegens im Wesentlichen in Bezug auf das erste Greifelement bzw. auf das zweite Greifelement relativ zueinander fixiert sind.

10. Verfahren nach Anspruch 9, bei dem das Voneinanderwegbewegen das Beaufschlagen der Platte (2) mit einer ersten vorbestimmten Spannung umfasst.

11. Verfahren nach Anspruch 9 oder 10, bei dem die erste Umfangszone gegenüber der zweiten Umfangszone ist, wobei das Verfahren vor dem Formen und nach dem Voneinanderwegbewegen ein Bewegen mithilfe des ersten Greifelements und des zweiten Greifelements wenigstens der ersten Umfangszone in die Nähe der zweiten Umfangszone umfasst, wobei die erste Umfangszone und die zweite Umfangszone während des Bewegens in der Nähe im Wesentlichen relativ zu dem ersten Greifelement bzw. zu dem zweiten Greifelement fixiert sind.

12. Verfahren nach Anspruch 11, soweit Anspruch 11 von Anspruch 10 abhängig ist, bei dem das Bewegen in der Nähe das Beaufschlagen der Platte (2) mit einer zweiten vorbestimmten Spannung umfasst, die geringer als die erste Spannung ist.

13. Verfahren nach irgendeinem vorhergehenden Anspruch, bei dem die erste Halbform (17) eine männliche Form ist und die zweite Halbform (18) eine weibliche Form ist, wobei das Formen ein Formen in der Platte (2) durch mechanisches Komprimieren des Materials zwischen der männlichen Form und der weiblichen Form umfasst.

14. Verfahren nach irgendeinem der Ansprüche 1 bis 12, bei dem die erste Halbform (17) eine männliche Form und die zweite Halbform (18) eine weibliche Form ist, wobei die männliche Form und die weibliche Form in einer solchen Weise geformt sind, dass sie, wenn sie einmal gekoppelt sind, dazwischen eine Formkammer definieren, in die ein unter Druck stehendes Fluid eingeführt wird, um das Material an der männlichen Form und der weiblichen Form anhaften zu lassen.

15. Verfahren nach irgendeinem vorhergehenden Anspruch, bei dem das Einstellen ein Gleiten (S) erlaubt, das von der ersten Umfangszone der Platte (2) in Bezug auf das erste Greifelement und von der zweiten Umfangszone der Platte (2) in Bezug auf das zweite Greifelement als Funktion einer Form der ersten Halbform (17) und der zweiten Halbform (18) gesteuert wird.

## Revendications

1. Procédé de formage d'une feuille (2) en matière thermoplastique renforcée, comprenant les étapes suivantes :
- chauffer ladite feuille (2) à une température de ramollissement de ladite matière ;
- saisir au moins une première zone périphérique et une seconde zone périphérique de ladite feuille (2) respectivement par un premier élément de préhension et un second élément de préhension ; et
- former ladite feuille (2) entre un premier demi-moule (17) et un second demi-moule (18) ;
**caractérisé en ce que**
lors dudit formage est prévu l'ajustement en fonction d'au moins un paramètre du procédé, de manière indépendante l'une de l'autre, d'une première force de préhension exercée par ledit premier élément de préhension sur ladite première zone périphérique, et d'une seconde force de préhension exercée par ledit second élément de préhension sur ladite seconde zone périphérique pour permettre auxdites zones périphériques d'être libérées de manière contrôlée des éléments de préhension respectifs.

2. Procédé selon la revendication 1, dans lequel ladite saisie comprend la saisie de ladite feuille (2) sensiblement le long de tout un périmètre de celle-ci au moyen d'une pluralité d'éléments de préhension (12), lors dudit formage étant prévu un ajustement en fonction dudit au moins un paramètre du procédé, indépendamment l'une de l'autre, des forces de préhension respectives exercées par lesdits éléments de préhension (12) sur des zones périphériques respectives (16) dudit périmètre, de manière à contrôler un coulissement (S) de chacune desdites zones périphériques (16) de ladite feuille (2) relativement à un élément de préhension respectif (12) en fonction d'une forme dudit premier demi-moule (17) et dudit second demi-moule (18).

3. Procédé selon la revendication 1, ou 2, dans lequel ledit ajustement comprend la libération de manière contrôlée desdites zones périphériques (16) par lesdits éléments de préhension (12).

4. Procédé selon l'une quelconque des revendications précédentes, dans lequel ledit ajustement comprend le rapprochement à proximité de l'une ou l'autre de zones périphériques opposées (16) de ladite feuille (2) de manière contrôlée.

5. Procédé selon l'une quelconque des revendications précédentes, dans lequel ladite saisie comprend la compression de zones périphériques (16) de ladite feuille (2).

6. Procédé selon l'une quelconque des revendications précédentes, dans lequel ledit paramètre du procédé est une vitesse relative dudit premier demi-moule (17) par rapport audit second demi-moule (18).

7. Procédé selon l'une quelconque des revendications précédentes, dans lequel ledit paramètre du procédé est une position relative dudit premier demi-moule (17) par rapport audit second demi-moule (18).

8. Procédé selon l'une quelconque des revendications précédentes, dans lequel ledit formage comprend le déplacement dudit premier demi-moule (17) et dudit second demi-moule (18) l'un vers l'autre de manière programmée.

9. Procédé selon l'une quelconque des revendications précédentes, et comprenant, après ledit chauffement, l'éloignement, au moyen dudit premier élément de préhension et dudit second élément de préhension, d'au moins ladite première zone périphérique de ladite seconde zone périphérique, ladite première zone périphérique et ladite seconde zone périphérique, pendant ledit éloignement, étant sensiblement fixes par rapport audit premier élément de préhension et audit second élément de préhension, respectivement.

10. Procédé selon la revendication 9, dans lequel ledit éloignement comprend la soumission de ladite feuille (2) à une première tension préréglée.

11. Procédé selon la revendication 9, ou 10, dans lequel ladite première zone périphérique est à l'opposé de ladite seconde zone périphérique, ledit procédé comprenant, avant ledit formage et après ledit éloignement, le rapprochement, au moyen dudit premier élément de préhension et dudit second élément de préhension, d'au moins ladite première zone périphérique à proximité de ladite seconde zone périphérique, ladite première zone périphérique et ladite seconde zone périphérique, pendant ledit rapprochement, étant sensiblement fixes par rapport audit premier élément de préhension et audit second élément de préhension, respectivement.

12. Procédé selon la revendication 11, lorsque la revendication 11 dépend de la revendication 10, dans lequel ledit rapprochement comprend la soumission de ladite feuille (2) à une seconde tension préréglée qui est inférieure à ladite première tension.

13. Procédé selon l'une quelconque des revendications précédentes, dans lequel ledit premier demi-moule (17) est un moule mâle et ledit second demi-moule (18) est un moule femelle, dans lequel ledit formage comprend le formage de ladite feuille (2) par compression mécanique de ladite matière entre ledit moule mâle et ledit moule femelle.

14. Procédé selon l'une quelconque des revendications 1 à 12, dans lequel ledit premier demi-moule (17) est un moule mâle et ledit second demi-moule (18) est un moule femelle, ledit moule mâle et ledit moule femelle étant conformés de telle manière que, une fois couplés, ils définissent entre eux une chambre de moulage dans laquelle un fluide sous pression est introduit afin de faire adhérer ladite matière audit moule mâle ou audit moule femelle.

15. Procédé selon l'une quelconque des revendications précédentes, dans lequel ledit ajustement permet le contrôle d'un coulissement (S) de ladite première zone périphérique de ladite feuille (2) par rapport audit premier élément de préhension et de ladite seconde zone périphérique de ladite feuille (2) par rapport audit second élément de préhension en fonction d'une forme dudit premier demi-moule (17) et dudit second demi-moule (18).
